Europäisches Patentamt

European Patent Office

Office européen des brevets

(19)

(11) Veröffentlichungsnummer: **0 300 174**
**B1**

(12) **EUROPÄISCHE PATENTSCHRIFT**

(45) Veröffentlichungstag der Patentschrift:
29.08.90

(21) Anmeldenummer: 88108748.0

(22) Anmeldetag: 01.06.88

(51) Int. Cl.⁵: **F16L 11/11**, F16L 33/26,
F16J 3/04

(54) Biegbarer Schlauch mit zueinander parallelen, ringförmigen Wellen und Axialabstützung.

(30) Priorität: 21.07.87 DE 3724069

(43) Veröffentlichungstag der Anmeldung:
25.01.89 Patentblatt 89/4

(45) Bekanntmachung des Hinweises auf die Patenterteilung:
29.08.90 Patentblatt 90/35

(84) Benannte Vertragsstaaten:
CH DE ES FR GB IT LI

(56) Entgegenhaltungen:
EP-A- 0 253 220
WO-A-86/04660
DE-A- 3 522 334

(73) Patentinhaber: Witzenmann GmbH
Metallschlauch-Fabrik Pforzheim, Östliche
Karl-Friedrich-Strasse 134, D-7530 Pforzheim(DE)

(72) Erfinder: Gropp, Reinhard, Dipl.-Ing., In der Laier 17,
D-7540 Neuenbürg-Arnbach(DE)
Erfinder: Schanz, Peter, Mainzer-Strasse 30,
D-7500 Karlsruhe 51(DE)

(74) Vertreter: Lemcke, Rupert, Dipl.-Ing. et al,
Patentanwälte Dipl.-Ing. R. Lemcke Dr.-Ing. H.J.
Brommer Bismarckstrasse 16 Postfach 4026,
D-7500 Karlsruhe 1(DE)

1    EP 0 300 174 B1    2

## Beschreibung

Die Erfindung betrifft einen biegbaren Schlauch mit zueinander parallelen, ringförmigen Wellen, endständigen Anschlußteilen und diese gegen axiale Abstandsänderungen haltenden, mit den Anschlußteilen in Zug- und/oder Druckrichtung fest verbundenen Längsstützmitteln in Form zweier außerhalb des Schlauches sich zu diesem im wesentlichen auf diametral einander gegenüberliegenden Seiten parallel erstreckender, flexibler Seile, wobei die Relativlage zwischen Schlauch und Seilen durch in Abständen über die Länge des Schlauches verteilt in dessen Wellentäler eingesetzte Abstandhalter in Form von aus zwei gleichen Hälften bestehenden Ringscheiben mit die Seile aufnehmenden Ausnehmungen gegeben und der Schlauch in Radialrichtung durch die Seile geführt und abgestützt ist.

Bei einer derartigen durch WO-A 86/04 660 bekannten Anordnung ist bezüglich der Wellen des Schlauches der Begriff «ringförmig» nicht nur als kreisringförmige Ausbildung zu verstehen, sondern ebenso beispielsweise in Form eines Schlauches mit ovalem oder ähnlichem Querschnitt. Soweit der Begriff «flexibles Seil» auftritt, ist dieser aus Gründen der Vereinfachung stellvertretend gewählt für alle hier in Frage kommenden, in ihrer Längsrichtung eine Kraftaufnahme ermöglichenden Teile. So kann das Seil ein Draht - oder Faserbündel sein, eine biegbare Stange, ein Band oder Bandpaket, eine Gliederkette, eine gelenkige Aneinanderreihung von stabförmigen Kettengliedern, die auch für sich selbst biegesteif sein können, etc.

Die gattungsgemäßen Schläuche, die auch als Bälge bezeichnet werden, bestehen in der Regel aus Metall. Je nach Anwendungsfall kommen jedoch auch andere Materialien, insbesondere Kunststoff, in Frage. Die Schläuche dienen üblicherweise der beweglichen Verbindung zweier medienführender Teile, an die sie angeschlossen sind. Wenn das Medium einen Überdruck aufweist, versucht der Schlauch bekanntermaßen, seine Länge zu vergrößern, so daß es erforderlich ist, durch zusätzliche Mittel, die hier durch zwei außerhalb des Schlauches angeordnete Seile gebildet sind, den gegenseitigen Längenabstand der Schlauchanschlußteile zu halten und den Schlauch gegen Ausknicken bzw. seitliches Ausbrechen zu stützen.

Die gattungsgemäße Konstruktion löst die Aufgabe, einen Schlauch der genannten Art so abzustützen, daß er einer tribologischen Beanspruchung nicht mehr unterliegt und damit ohne verschleißbedingte Beeinträchtigung durch andere Teile hinsichtlich der aufzunehmenden Belastung, insbesondere der Biegewechselbeanspruchung, seine eigene Lebensdauer erreichen kann. Dazu sind die Seile in der Regel in der neutralen Biegeebene des Schlauches angeordnet, so daß sich keine Relativbewegungen gegenüber dem Schlauch weder in Längsrichtung noch in Umfangsrichtung ergeben, wobei die Abstandhalter dazu dienen, die Teile in der genannten Relativlage zum Schlauch zu halten. Dazu können die Abstandhalter im wesentlichen als in die Schlauchwellen eingesetzte, aus zwei Hälften bestehende Ringscheiben ausgebildet sein, die über in ihnen angeordnete Bohrungen das Seil erfassen und damit relativ zum Schlauch positionieren.

Hiermit ergeben sich jedoch Probleme dahingehend, daß für die Montage das Einfädeln der Seile in die Bohrungen an den beiden Enden der Ringscheibenhälften eine außerordentliche Schwierigkeit darstellt, wenn man berücksichtigt, daß die Seile schlußendlich mit den Anschlußstücken erst verbunden werden können, nachdem sie durch alle auf der Strecke zwischen den Anschlußstücken angeordneten Ringscheibenhälften hindurchgefädelt sind. Das Einfädeln führt bei beispielsweise aus Fasern oder Drähten gewickelten Seilen zu der Gefahr des Aufdröselns der einzelnen Schläge des Seiles und im übrigen dazu, daß bei der dann so angebrachten Anordnung von Seilen und Ringscheibenhälften die Herstellung der Verbindung zwischen den Seilen und den Anschlußstücken bei entsprechend vorgefertigten Seillängen auf Schwierigkeiten stößt. Allein schon das Einfädeln der Seile in die endständigen Bohrungen der Ringscheibenhälften ist sehr mühsam, auf jeden Fall eine reine Handarbeit, so daß die insoweit vorgegebene Montage einer Automatisierung nicht zugänglich ist.

Aufgabe der Erfindung ist es, die Gestaltung einer Schlaucheinheit der eingangs genannten Art so abzuändern, daß die Probleme hinsichtlich des Zusammenfügens zwischen Seilen und Ringscheiben beseitigt und die Endmontage mit den Anschlußstücken in einfacher Weise ermöglicht wird, wobei die Maßnahmen gleichzeitig so gestaltet sein sollen, daß auch eine automatische Montage mittels entsprechender Montagevorrichtungen erfolgen kann.

Ausgehend von einem biegbaren Schlauch der eingangs genannten Art ist diese Aufgabe erfindungsgemäß dadurch gelöst, daß die Ringscheibenhälften ohne Zuhilfenahme der Seile durch Verschlußmittel zusammengehalten oder zusammengefügt sind.

Durch diese erfindungsgemäßen Maßnahmen ist erreicht, daß die Ringscheibenhälften in einer Form mit den Seilen kombiniert werden, die zur Herstellung des Verbundes nicht des Kraftschlusses bzw. des Formschlusses mit dem Seil selbst bedürfen, so dass gleichzeitig erreicht ist, dass das Seil von den Verschlußbelastungen, wie sie sich aus den Ringscheibenhälften ergeben können, befreit ist.

Damit schaffen die erfindungsgemäßen Maßnahmen eine Bauform, die das Ein- bzw. Aufsetzen der Ringscheibenhälften ermöglicht entweder nachdem die Seile zwischen den Anschlußstücken angebracht worden sind oder aber indem die jeweiligen Seile mit den ihnen zugeordneten Ringscheibenhälften als gesamte Baueinheit aufgesetzt werden.

Nach einer ersten Ausführungsform der Erfindung sind die beiden Hälften der Ringscheiben entlang einer die Ausnehmungen durchquerenden und diese je zur Hälfte bildenden Stoßfuge gegeneinander gesetzt. Hier ist also eine Fertigung vorgesehen, bei der die Seile unabhängig von den Ringscheibenhälften zwischen den Anschlußstücken montiert werden können, wobei die Ringscheibenhälften teilweise vorher in die Wellentäler des Schlauches eingesetzt sind, teilweise später aufgesetzt werden, auf jeden Fall aber die Seile ohne das

2

Erfordernis eines Einfädelvorganges und ohne Beeinträchtigung der Verlegung der Seile zwischen den Anschlußstücken schlußendlich von innen und von außen erfassen.

Nach einer anderen Bauform kann vorgesehen werden, daß jede Hälfte der Ringscheiben ausgehend von ihren im Bereich der Seile gelegenen Enden je eine sich tangential erstreckende, die andere Ringscheibenhälfte überdeckende Fahne aufweist und daß jede Ausnehmung der Ringscheibenhälften für die Seile über einen sich in Längsrichtung der zugeordneten Fahne erstreckenden Schlitz von der Breite des Seilquerschnittes nach außen offen ist.

Hier ist also eine Bauform vorgesehen, bei der nach der Anbringung der Seile zwischen den Anschlußstücken des Schlauches die Ringscheibenhälften jeweils gegenläufig von der Seite her in die Wellentäler und auf die Seile aufgeschoben werden, um dort schließlich in noch näher zu beschreibender Weise einen in Umfangsrichtung schlüssigen Verbund zu schaffen.

Eine weitere Ausführungsform kann dadurch ausgezeichnet sein, daß jedes Seil in zwei nebeneinander liegende Seilstränge aufgeteilt ist und daß die beiden Hälften der Ringscheiben entlang einer zwischen den Seilsträngen hindurchgeführten Stoßfuge gegeneinander gesetzt sind. Hier ist also von dem Gedanken Gebrauch gemacht, daß man Ringscheibenhälften für sich genommen mit entsprechenden "Seilhälften" ausstatten kann, um sie dann gegenläufig, d.h. also von zwei einander gegenüber liegenden Seiten aus, auf den Schlauch aufzusetzen. Wesentlich ist dann schlußendlich, daß die Ringscheibenhälften gegeneinander in abstützenden Kontakt gelangen, damit Umfangsspannungen aufgenommen werden können.

Eine weitere Ausführungsform der Erfindung kann jedoch auch darin bestehen, daß die beiden Hälften der Ringscheiben entlang einer außerhalb der Ausnehmungen gelegenen Stoßfuge gegeneinander gesetzt sind. Hier wird der vorstehend schon angesprochene Gedanke fortgeführt, daß man Ringscheibenhälften mit den ihnen zugeordneten Seilen ausstatten und dann als komplette Baueinheit gegeneinander auf den Schlauch aufsetzen kann. Dabei ist selbstverständlich entsprechend dem vorstehenden Merkmal die Möglichkeit gegeben, die Kombination der Ringscheibenhälften bzw. deren Verbindung miteinander auch außerhalb des Bereiches der Seile vorzusehen.

Im Bereich der zuletztgenannten Ausführungsformen kann es zweckmäßig sein, daß die Ausnehmungen der Ringscheibenhälften geschlossene Bohrungen sind. Es besteht jedoch auch die Möglichkeit, daß die Ausnehmungen der Ringscheibenhälften nach radial innen offen sind, so daß sich die Ringscheibenhälften überhaupt erst zum Schluß nach Verlegung der Seile von außen aufsetzen lassen.

Für die vorstehend genannten Bauformen ist es notwendig, die Ringscheibenhälften zusammenzuhalten. Hierzu ist nach der Erfindung vorgesehen, daß die Ringscheibenhälften durch einen außerhalb formschlüssig auf sie gesetzten Ring zusammengehalten sind und daß der Ring durch den Formschluß gegen seitliches Abrutschen von den Ringscheibenhälften gehalten ist.

Es ist also vorgesehen, daß auf die normalerweise zwei Ringscheibenhälften von außen ein diese zusammenhaltender Ring aufgesetzt wird, der mit Mitteln versehen ist, die seinen formschlüssigen Verbund mit den Ringscheibenhälften herstellen so, daß er tatsächlich auch auf den Ringscheibenhälften sitzen bleibt und im Laufe des Betriebes nicht seitlich von diesen abrutschen kann.

In diesem Zusammenhang kann für die außen aufgesetzten Ringe vorgesehen sein, daß benachbarte Ringe mit ihren aufeinanderzugewandten Seitenkanten treppenförmig ineinandergreifen. Dies führt zu einem nach außen hin durch die aufgesetzten Ringe hergestellten, zusammenhängenden Schlauchgebilde, das die darin angeordnete Baueinheit vor Verschmutzungen oder sonstigen äußeren Beeinträchtigungen schützt.

Im Zusammenhang mit dem vorerwähnten Ring kann es insgesamt zweckmäßig sein, daß die Bewegbarkeit benachbarter Ringe in Axialrichtung des Schlauches auf ein definiertes Maß festgelegt ist, womit sich die Möglichkeit eröffnet, die Biegbarkeit bzw. den Biegebereich des erfindungsgemäßen Schlauches zu bestimmen.

Ferner können die beiden Hälften der Ringscheiben sich an zwei außerhalb der Ausnehmungen diametral einander gegenüberliegenden Bereichen mit dort tangential von ihnen ausgehenden Fahnen überlappend ausgebildet sein, um die vorstehend beschriebene Wirkung zu erzielen.

Was schließlich die Verbindung der beiden Hälften der Ringscheiben im Bereich ihrer gegenseitigen Überdeckung betrifft, so kann diese durch Verhaken, Verschweißen, Kleben oder dergleichen kraft- oder formschlüssige Fügeverfahren bewirkt werden.

Weitere Merkmale und Einzelheiten des Gegenstandes der Erfindung ergeben sich aus der nachfolgenden Beschreibung von Ausführungsformen, die auf der Zeichnung dargestellt sind. In der Zeichnung zeigen:

Figur 1 einen Schlauch mit geteilter Ringscheibe im Radialschnitt;

Figur 2 zwei Ausführungsformen einer Variante gemäß Figur 1;

Figur 3 einen Axialschnitt eines Schlauches gemäß Figur 1 und 2;

Figur 4 eine Abwandlung der Ringscheibenabstützung;

Figur 5 eine weitere Abwandlung der Ringscheibenabstützung;

Figur 6 eine weitere Ausbildungsform der die Seile fassenden Ringscheibe;

Figur 7 eine Abwandlung von Ringscheiben mit außerhalb der Seile gelegener Teilung;

Figur 8 eine Schnittansicht gemäß der Schnittlinie A-A in Figur 7 und

Figur 9 eine weitere Abwandlung geteilter Ringscheiben mit im Bereich der Seile gelegener Ringscheibenteilung.

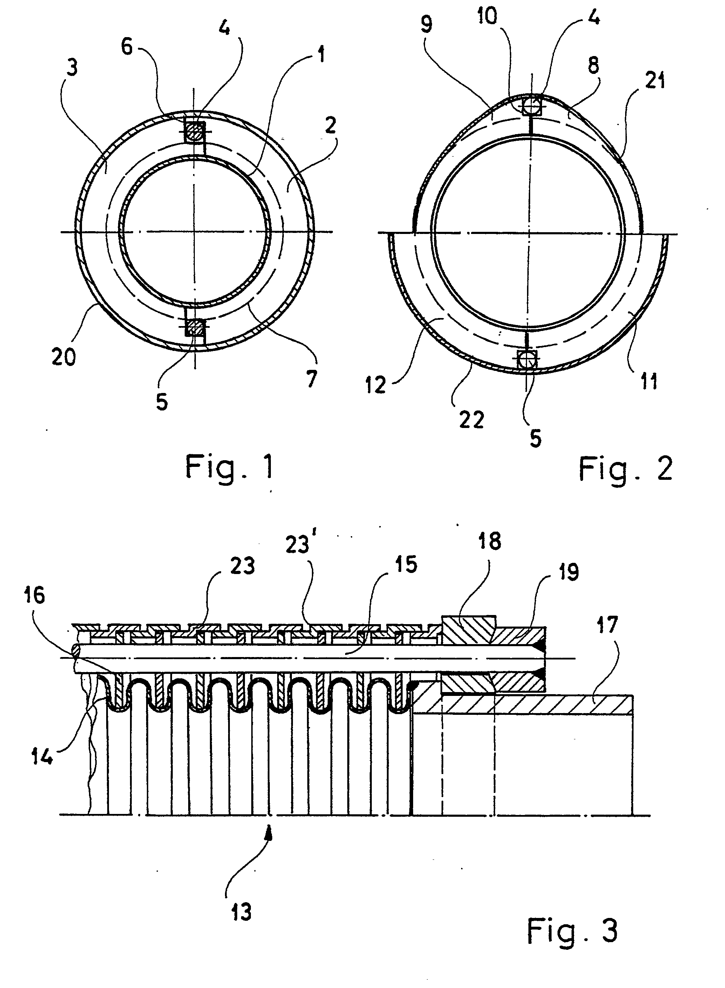

Figur 1 zeigt im radialen Schnitt einen Wellschlauch mit ringförmiger Wellung im Bereich eines Wellentales 1, wobei in das Wellental Ringscheibenhälften 2, 3 eingesetzt sind, die den Wellschlauch achsparallel begleitende Seile 4, 5 an ihrer Stoßfuge 6 erfassen, indem diese Stoßfuge so ausgebildet ist, daß die Ringscheibenhälften 2, 3 nach der Anbringung der Seile 4, 5 seitlich von außen aufgesetzt werden können.

Figur 1 zeigt durch die gestrichelte Linie 7 die Wellenberge des Wellschlauches.

Gemäß Figur 2 ist eine Variante zu dem anhand der Figur 1 beschriebenen Gegenstand dargestellt. Hier werden wiederum auf die Seile 4, 5 in entsprechender Weise Ringhälften 8, 9 aufgesetzt, deren Stoßfuge 10 ebenfalls im Bereich der Seile 4, 5 liegt, wobei jedoch die Ausbildung gegenüber dem Gegenstand gemäß Figur 1 konstruktiv etwas anders vorgesehen ist, wie sich dies ohne weiteres aus der gegenüberstellenden Betrachtung der Zeichnungen ergibt.

Gemäß Figur 2, untere Hälfte, sind die Ringhälften 11, 12 gegenüber den auf der oberen Hälfte dargestellten Ringhälften 8, 9 voll ausgebildet. Daraus ist ersichtlich, daß durch die Gestaltung der Ringhälften 8, 9 eine Materialersparnis in den Bereichen erzielt wurde, die zur Erfassung der Seile 4, 5 nicht erforderlich sind.

Figur 3 zeigt im Axialschnitt die Ausbildung eines Schlauches 13 mit ringförmigen Wellen 14 und dazu achsparallel angeordneten Seilen 15, wobei die Seile durch Ringscheibenhälften 16 der bereits anhand der Figuren 1 und 2 beschriebenen Art erfaßt sind.

Der Schlauch 13 ist endständig mit einem Anschlußstück 17 versehen, an das die Seile 15 über einen Flansch 18 und eine Fassung 19 angeschlossen sind.

Aus Figur 3 ist in Verbindung mit den Darstellungen gemäß Figuren 1 und 2 im übrigen ersichtlich, daß die Ringhälften 2,3 bzw. 8, 9 bzw. 16 durch Ringe 20, 21, 22 bzw. 23 zusammengehalten werden, die in formschlüssiger Weise auf die Ringhälften aufgesetzt sind. Dabei ist gemäß Figur 3 die Ausbildung dieser Ringe 23 so getroffen, daß diese eine Abtreppung 23' zur Bildung einer schuppenförmig einandergreifenden Verbindung enthalten, die gleichzeitig für eine geschlossene Ummantelung der Schlauchkonstruktion sorgt, um einen weitgehenden Schutz gegen äußere Einflüsse zu bewirken, andererseits aber auch durch die mittels der Abtreppung gegebene axiale Beschränkung der Bewegbarkeit der Ringe 23 zu einer Begrenzung der Biegbarkeit des Schlauches 13 zu führen.

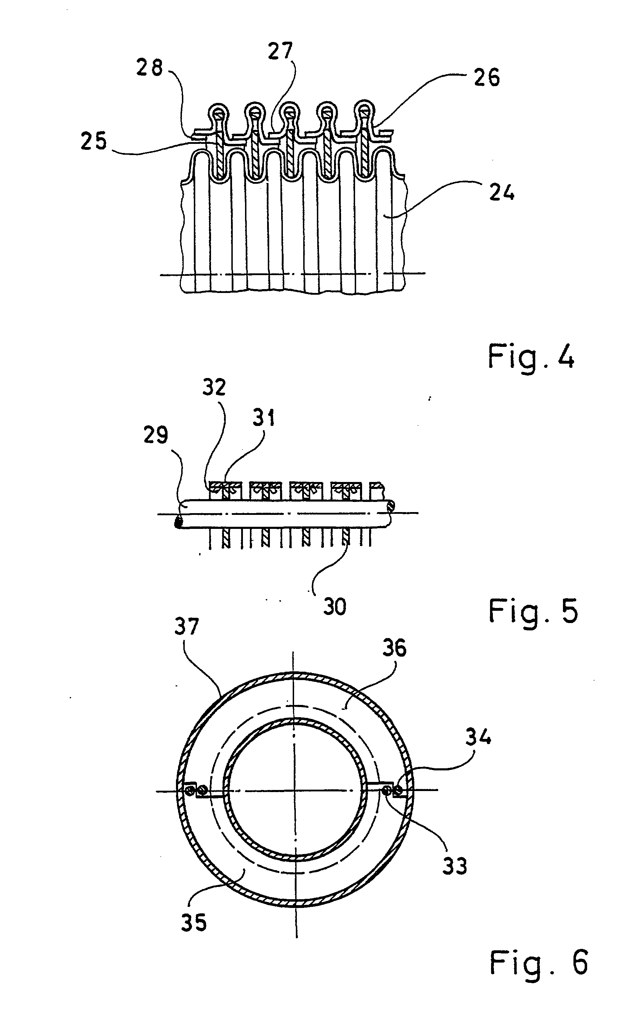

Eine Variante zu dieser Problematik zeigt Figur 4, indem dort auf die Ringe 25 des Schlauches 24 hutförmige Ringe 26 aufgesetzt sind, die gleichzeitig über axiale Fortsätze 27 und 28 eine axiale Bewegungsbegrenzung schaffen. Die nicht dargestellten Seile liegen außerhalb des Schlauches vor und hinter der die Schlauchachse bildenden Linie.

Gemäß Figur 5 ist eine vereinfachte Ausführungsform der Fassung von die Seile 29 aufnehmenden Ringscheibenhälften 30 dargestellt, wobei die Ringscheibenhälften 30 durch Ringe 31 mittels deren eingebogener Nasen 32 gehalten werden so, daß die Ringe 31 formschlüssig auf den Ringen 30 fixiert sind und diese in der gewünschten Weise zusammenhalten.

Gemäß Figur 6 ist eine Ausführungsform gezeigt, bei der die Seile jeweils in Seilstränge 33, 34 aufgeteilt sind, die von Ringscheibenhälften 35, 36 aufgenommen werden, deren gegenseitige Stoßfuge zwischen den beiden Seilsträngen 33, 34 hindurchgeführt ist. Zusammengehalten werden diese Ringhälften 35, 36 durch einen sie jeweils umfassenden Ring 37, der im Prinzip wieder den Ringen entspricht, wie sie anhand der Figuren 3 - 5 mehr ins einzelne beschrieben sind.

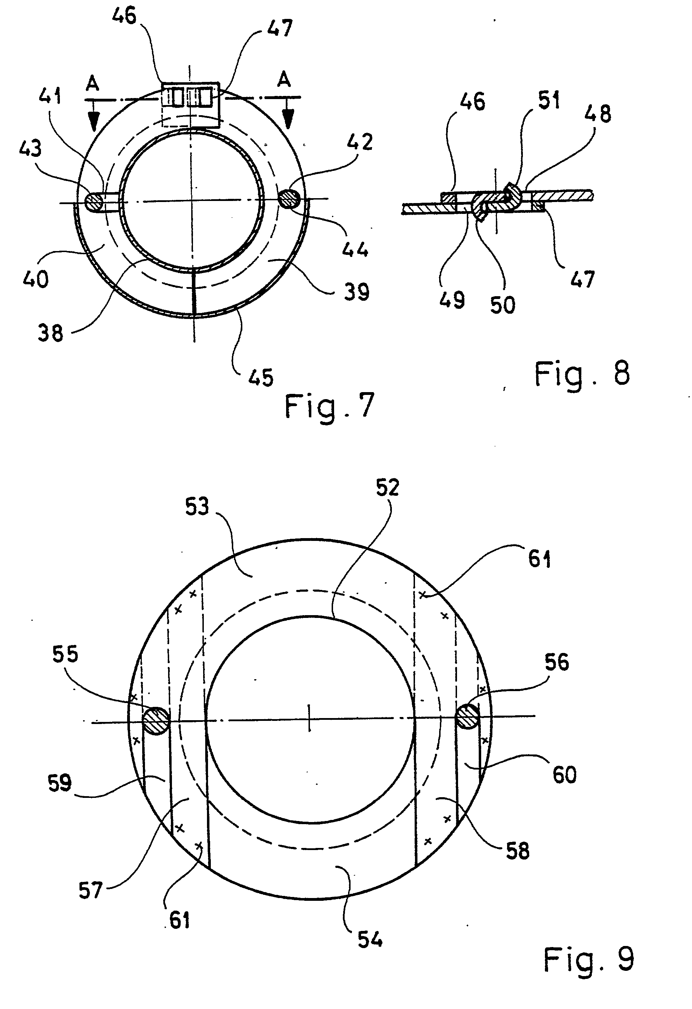

Figur 7 zeigt eine Ausführungsform im Radialschnitt, bei der auf einen Schlauch 38 Ringscheibenhälften 39, 40 aufgesetzt sind, deren Stoßfuge außerhalb der Ausnehmungen 41, 42 für zum Schlauch 38 parallel angeordnete Seile 43 bzw. 44 liegt.

Um die Ringscheibenhälften zusammenzuhalten, ist dabei gemäß der unteren Hälfte der Figur 7 wieder ein Ring 45 der bereits früher beschriebenen Art vorgesehen, der in formschlüssiger Weise auf die Ringscheibenhälften 39, 40 aufgesetzt ist.

Gemäß der oberen Hälfte der Figur 7 ist ersichtlich eine Überdeckung der Ringscheibenhälften 39, 40 durch Fahnen 46, 47, die Ausnehmungen 48, 49 bilden, in die jeweils von der anderen Fahne ausgehende Haken 50, 51 zur Herstellung einer formschlüssigen Verbindung eingreifen, wie dies im Schnitt A-A noch einmal in Figur 8 dargestellt ist.

Aus Figur 7 ist im übrigen ersichtlich, daß die Ausnehmungen 41 der Ringscheibenhälften 39 bzw. 40 in Form radial nach innen offener Ausnehmungen ausgebildet sein können. Ebenso können jedoch die Ausnehmungen 42 auch in Form gegenüber dem Seilquerschnitt vergrößerter Bohrungen ausgebildet sein, so daß im Endeffekt hier Seile 44 mit darauf aufgereihten Ringscheibenhälften 39 als Bausatz auf den Schlauch 38 seitlich aufgesetzt werden und anschließend mit einem entsprechend gegenüber aufgesetzten Bausatz verbunden werden können.

Figur 9 zeigt schließlich auf einen Schlauch 52 radial in dessen Wellentäler aufgesetzte Ringscheibenhälften 53, 54, die ausgehend von ihren im Bereich der Seile 55, 56 gelegenen Enden je eine sich tangential erstreckende, die andere Ringscheibenhälfte überdeckende Fahne 57,58 aufweisen, wobei jede Ausnehmung der Ringscheibenhälften für die Seile über einen sich in Längsrichtung der zugeordneten Fahne erstreckenden Schlitz 59, 60 von der Breite des Seilquerschnittes nach außen offen ist.

Damit können ersichtlich die Ringscheibenhälften 53, 54 nach dem Anbringen der Seile 55, 56 radial von außen aufgesteckt werden. Um den so hergestellten Aufbau abzusichern, sind benachbarte Ringscheibenhälften 53, 54 an den durch die Kreuze 61 markierten Stellen miteinander verschweißt.

## Patentansprüche

1. Biegbarer Schlauch mit zueinander parallelen, ringförmigen Wellen, endständigen Anschlußteilen und diese gegen axiale Abstandsänderungen haltenden, mit den Anschlußteilen in Zug- und/oder Druckrichtung fest verbundenen Längsstützmitteln in Form zweier außerhalb des Schlauches sich zu diesem im wesentlichen auf diametral einander gegen-überliegenden Seiten parallel erstreckender, flexi-bler Seile, wobei die Relativlage zwischen Schlauch und Seilen durch in Abständen über die Länge des Schlauches verteilt in dessen Wellentäler eingesetzte Abstandhalter in Form von aus zwei gleichen Hälften bestehenden Ringscheiben mit die Seile aufnehmenden Ausnehmungen gegeben und der Schlauch in Radialrichtung durch die Seile geführt und abgestützt ist, dadurch gekennzeichnet, daß die Ringscheibenhälften (2, 3; 8, 9; 11, 12; 16, 25, 30, 35, 36, 39, 40, 53, 54) ohne Zuhilfenahme der Seile (4, 5, 15, 29, 33, 34, 43, 44, 55, 56) durch Ver-schlußmittel zusammengehalten oder zusammenge-fügt sind.

2. Schlauch nach Anspruch 1, dadurch gekennzeichnet, daß die beiden Hälften (2, 3; 8, 9; 11, 12) der Ringscheiben entlang einer die Ausnehmungen durchquerenden und diese je zur Hälfte bildenden Stoßfuge (6, 10) gegeneinander gesetzt sind.

3. Schlauch nach Anspruch 1, dadurch gekennzeichnet, daß jede Hälfte (53, 54) der Ringscheiben, ausgehend von ihren im Bereich der Seile (55, 56) gelegenen Enden, je eine sich tangential er-streckende, die andere Ringscheibenhälfte über-deckende Fahne (57, 58) aufweist und daß jede Ausnehmung der Ringscheibenhälften für die Seile über einen sich in Längsrichtung der zugeordneten Fahne erstreckenden Schlitz (59, 60) von der Breite des Seilquerschnittes nach außen offen ist.

4. Schlauch nach Anspruch 1, dadurch gekennzeichnet, daß jedes Seil in zwei nebeneinanderliegende Seilstränge (33, 34) aufgeteilt ist und daß die beiden Hälften (35, 36) der Ringscheiben entlang einer zwischen den Seilsträngen hindurchgeführten Stoßfuge gegeneinandergesetzt sind.

5. Schlauch nach Anspruch 1, dadurch gekennzeichnet, daß die beiden Hälften (39, 40) der Ringscheiben entlang einer außerhalb der Ausnehmungen (41, 42) gelegenen Stoßfuge gegeneinandergesetzt sind.

6. Schlauch nach Anspruch 5, dadurch gekennzeichnet, daß die Ausnehmungen (42) der Ringscheibenhälften (39, 40) geschlossene Bohrungen sind.

7. Schlauch nach Anspruch 5, dadurch gekennzeichnet, daß die Ausnehmungen (41) der Ringscheibenhälften (39, 40) nach radial innen hin offen sind.

8. Schlauch nach einem der vorhergehenden Ansprüche, dadurch gekennzeichnet, daß die Ringscheibenhälften (2, 3; 8, 9, 11, 12; 35, 36; 39, 40) durch einen außen formschlüssig auf sie gesetzten Ring (20, 21, 22, 23, 26, 31, 37, 45) zusammengehalten sind und daß der Ring durch den Formschluß gegen seitliches Abrutschen von den Ringscheibenhälften gehalten ist.

9. Schlauch nach Anspruch 8, dadurch gekennzeichnet, daß benachbarte Ringe (23) mit ihren aufeinander zugewandten Seitenkanten treppenförmig (23') ineinandergreifen.

10. Schlauch nach einem der Ansprüche 8 oder 9, dadurch gekennzeichnet, daß die Bewegbarkeit benachbarter Ringe (23) in Axialrichtung des Schlauches (14) auf ein definiertes Maß festgelegt ist.

11. Schlauch nach Anspruch 1, dadurch gekennzeichnet, daß die beiden Hälften (39, 40) der Ringscheiben sich an zwei außerhalb der Ausnehmungen (41, 42) diametral einander gegenüberliegenden Bereichen mit dort tangential von ihnen ausgehenden Fahnen (46, 47) überlappend ausgebildet sind.

12. Schlauch nach Anspruch 3 oder 11, dadurch gekennzeichnet, daß die beiden Hälften (39, 40, 53, 54) der Ringscheiben im Bereich ihrer gegenseitigen Überdeckung durch Verhaken (50, 51), Verschweißen (61), Kleben oder dergleichen kraft- oder formschlüssig miteinander verbunden sind.

## Claims

1. A flexible hose with mutually parallel annular corrugations, coupling parts at his ends and, for holding the latter against changes in axial spacing, longitudinal support means which are rigidly connected in the tensile and/or compressive direction and which are in the form of two flexible cables extending externally of the hose and in parallel therewith on essentially diametrally mutually opposite sides, wherein the relative position between hose and cables is given by spacers distributed at intervals along the length of the hose and inserted into the troughs of the corrugations thereof, the spacers being in the form of annular disks consisting of two like halves with recesses for receiving the cables, and wherein the hose is radially guided and supported by the cables, characterised in that the annular disk halves (2, 3; 8, 9; 11, 12; 16, 25, 30, 35, 36, 39, 40, 53, 54) are held or joined together by closure means without the aid of the cables (4, 5, 15, 29, 33, 34, 43, 44, 55, 56).

2. Hose according to claim 1, characterised in that the two halves ( 2, 3; 8, 9; 11, 12) of the annular disks are set against each other along butt joints (6, 10) passing through the recesses and each form halves of the butt joints.

3. Hose according to claim 1, characterised in that each half (55, 56), has a respective tangentially extending lug (57, 58) which overlaps the other annular disk-half, and that each recess of the annular disk halves is open for the cables from the width of the cable cross-section towards the outside via a slit (59, 60) extending in the longitudinal direction of the associated lug.

4. Hose according to claim 1, characterised in that each cable is divided into two juxtaposed cable strands (33, 34) and that the two halves (35, 36) of the annular disks are set against each other along a butt joint passed between the cable strands.

5. Hose according to claim 1, characterised in that the two halves (39, 40) of the annular disks are set against each other along a butt joint located outside the recesses (41, 42).

6. Hose according to claim 5, characterised in that the recesses (42) of the annular disk-halves (39, 40) are closed bores.

7. Hose according to claim 5, characterised in that the recesses (41) of the annular disk-halves (39, 40) are open in the radially inwardly direction.

8. Hose according to one of the preceding claims, characterised in that the annular disk-halves (2, 3; 8, 9; 11, 12; 35, 36; 39, 40) are held together by a ring (20, 21, 22, 23, 26, 31, 37, 45) set externally shape-lockingly on them, and that the ring is held by the shape-locking against laterally slipping off the annular disk-halves.

9. Hose according to claim 8, characterised in that adjacent rings (23) engage each other in a step-like (23') manner by way of their side edges facing each other.

10. Hose according to one of claims 8 or 9, characterised in that the mobility of adjacent rings (23) in the axial direction of the hose (14) is determined to a defined extent.

11. Hose according to claim 1, characterised in that the two halves (39, 40) of the annular disks are formed at two diametrally mutually opposite regions outside the recesses (41, 42) by way of overlapping lugs (46, 47) which extend tangentially from them there.

12. Hose according to claim 3 or 11, characterised in that the two halves (39, 40; 53, 54) of the annular disks are coupled together in the region of their mutual overlap in a positive or shape-locking manner by a hooked connection (50, 51), welding (61), gluing ot the like.

**Revendications**

1. Tube souple flexible comportant des ondes annulaires, parallèles entre elles, des pièces de raccordement d'extrémité et des moyens d'appui longitudinaux évitant à celles-ci une variation axiale de distance, reliés de manière fixe en direction de traction et de compression aux pièces de raccordement, constitués de deux câbles flexibles s'étendant, en dehors du tube souple, sensiblement parallèlement à celui-ci sur des côtés diamétralement opposés, la position relative entre le tube souple et les câbles étant donnée par des entretoises, placées dans les fonds d'ondes du tube souple à distances régulières sur la longueur de celui-ci, constituées de deux plaques annulaires composées de deux moitiés semblables comportant des évidements recevant les câbles, et le tube souple étant guidé par les câbles et appuyé en direction radiale sur eux, caractérisé en ce que les moitiés de plaques annulaires (2, 3: 8, 9; 11, 12; 16, 25, 30, 35, 36, 39, 40, 53, 54) sont maintenues l'une contre l'autre et assemblées par des moyens de fermeture sans l'aide des câbles (4, 5, 15, 29, 33, 34, 43, 44, 55, 56).

2. Tube souple selon la revendication 1, caractérisé en ce que les deux moitiés (2, 3; 8, 9; 11, 12) des plaques annulaires sont appliquées l'une contre l'autre le long d'un joint vif (6, 10) traversant un des évidements et constituant respectivement la moitié de celui-ci.

3. Tube souple selon la revendication 1, caractérisé en ce que chaque moitié (53, 54) des plaques annulaires, en partant de ses extrémités situées dans la zone des câbles (55, 56), présente respectivement une saillie (57, 58) s'étendant tangentiellement, recouvrant l'autre moitié de plaque annulaire, et en ce que chaque évidement des moitiés de plaques annulaires est ouvert vers l'extérieur pour les câbles par une fente (59, 60), de la largeur de la section de câble, s'étendant dans la direction longitudinale de la saillie associée.

4. Tube souple selon la revendication 1, caractérisé en ce que chaque câble est divisé en deux torons de câbles (33, 34) situés l'un près de l'autre et en ce que les deux moitiés (35, 36) des plaques annulaires sont appliquées l'une contre l'autre le long d'un joint vif situé entre les torons de câbles.

5. Tube souple selon la revendication 1, caractérisé en ce que les deux moitiés (39, 40) des plaques annulaires sont appliquées l'une contre l'autre le long d'un joint vif placé en dehors des évidements.

6. Tube souple selon la revendication 5, caractérisé en ce que les évidements (42) des moitiés (39, 40) des plaques annulaires sont des alésages borgnes.

7. Tube souple selon la revendication 5, caractérisé en ce que les évidements (41) des moitiés (39, 40) de plaques annulaires sont radialement ouverts vers l'intérieur.

8. Tube souple selon l'une des précédentes revendications, caractérisé en ce que, les moitiés de plaques annulaires (2, 3; 8, 9; 11, 12; 35, 36; 39, 40) sont maintenues entre elles par un anneau (20, 21, 22, 23, 26, 31, 37, 45) appliqué extérieurement sur elles en engagement positif et en ce que l'anneau, par l'engagement positif, évite une friction des moitiés de plaques annulaires.

9. Tube souple selon la revendication 8, caractérisé en ce que des anneaux voisins (23) pénètrent l'un dans l'autre selon une forme d'escalier (23') par leurs arêtes latérales tournées les unes vers les autres.

10. Tube souple selon l'une des revendications 8 ou 9, caractérisé en ce que la mobilité d'anneaux voisins (23) est fixée à une valeur définie dans la direction axiale du tube souple (14).

11. Tube souple selon la revendication 1, caractérisé en ce que les deux moitiés (39, 40) des plaques annulaires sont constituées de manière à se recouvrir dans deux zones diamétralement opposées l'une à l'autre en dehors des évidements (41, 42) avec des saillies (46, 47) qui en sortent tangentiellement à cet emplacement.

12. Tube souple selon la revendication 3 ou 11, caractérisé en ce que les deux moitiés (39, 40; 53, 54) des plaques annulaires sont reliées l'une à l'autre par adhérence ou en engagement positif dans la zone de leur recouvrement réciproque par accrochage (50, 51), soudure (61), collage ou similaire.

Fig. 1

Fig. 2

Fig. 3

Fig. 4

Fig. 5

Fig. 6

Fig. 7

Fig. 8

Fig. 9